# EUROPEAN PATENT APPLICATION

(11) **EP 2 317 503 A1**
(43) Date of publication of application: **04.05.2011**
(21) Application number: 09809708.2
(22) Date of filing: 10.07.2009
(51) Int. Cl.: G09G 3/36, G09G 3/20, G09G 3/34, H04N 5/66

(54) **IMAGE DISPLAY DEVICE, TELEVISION RECEIVER, DRIVING METHOD FOR THE IMAGE DISPLAY DEVICE, AND DRIVING METHOD FOR THE TELEVISION RECEIVER**

(30) Priority: 26.08.2008 JP 2008217394
(71) Applicant: Sharp Kabushiki Kaisha, Osaka-shi, Osaka 545-8522 (JP)
(72) Inventor: ICHIOKA, Hideki, Osaka 545-8522 (JP); KUSUMOTO, Toshiharu, Osaka 545-8522 (JP)
(74) Representative: Goddar, Heinz J.
(86) International application number: PCT/JP2009/062620
(87) International publication number: WO 2010/024053

(57) **Abstract**

A liquid crystal display device (20) having an ornamental image display area (22a) for displaying an ornamental image thereon is configured such that the ornamental image display area (22a) provides a luminance of not more than 50 cd/m² for display of the ornamental image thereon.

## Description

### Technical Field

The present invention relates to an image display device having a display mode in which an ornamental image of a painting, a photograph, or the like is displayed, a television receiver, a method for driving an image display device, and a method for driving a television receiver.

### Background Art

What has been recently demanded of home-use electronic equipment and the like is the development of products that can be used as part of interior decorations during their idle time and the like time by capitalizing on their designs.

In particular, a liquid crystal display device for use as a monitor or the like, and a television receiver in which a component required for television viewing, such as a tuner, is added to the liquid crystal display device have increased their presence due to the trend toward larger size in these days. Accordingly, the above demand has been increasing.

In response to such demand, for television receivers, for example, an attempt has been made to improve their ability of coordinating with interior decorations, by a method of making colors of frame structures selectable and other methods.

However, a screen of the television receiver, which is a large part of its outer appearance, is visually impactful. Only with the above attempt, it is therefore difficult to improve the ability of coordinating with interior decorations.

In view of this, there has been a demand for improvement of the screen of the television receiver.

The following will specifically describe the improvement of the screen, taking as an example the television receiver provided with the liquid crystal display device.

In some case, the television receiver using the liquid crystal display device is mounted on a wall, from its light weight and slim design.

Further, the screen of the liquid crystal display device is all in black when nothing is shown on the screen.

Therefore, during the time that an original function of the television receiver, i.e. the function of displaying image data derived from broadcasting service, video recording, or the like is not used, for example, during the time that power of the television receiver mounted on the wall is turned off and during the time that no image data is supplied to the television receiver, nothing is displayed on the screen. This means that a black object exists on the wall.

The black object on the wall impairs coordination with interior decorations. Due to the recent trend toward upsizing of the television receiver, the black object on the wall further impairs coordination with interior decorations.

In view of this, there have been proposed some ideas, such as displaying a still image during the time that the original function of the television receiver, i.e. the function of displaying image data from broadcasting service, video recording, or the like is not used, and the like times.

### (Patent Literature 1)

Examples of the technique relevant to the display of a still image include the technique disclosed in Patent Literature 1.

Patent Literature 1 discloses the technique of providing a different luminance each for display of a moving image and for display of a still image.

Specifically, Patent Literature 1 discloses the technique of causing the screen to provide a high luminance for display of a moving image, such as a video image, and to provide a low luminance for display of a still image supplied from a personal computer, etc.

### Citation List

### Patent Literature

Patent Literature 1
   Japanese Unexamined Utility Model Application Publication, Jitsukaihei, No. 6-47989 (Publication Date: June 28, 1994)

### Summary of Invention

### Technical Problem

However, the technique disclosed in Patent Literature 1 fails to consider the point of displaying still images of a painting and a photograph in such a manner that they look genuine.

That is, Patent Literature 1 discloses the technique of causing the screen to provide a low luminance for display of a still image thereon. However, the technique is aimed at reducing power consumption and lessening fatigue of eyes.

In the technique of Patent Literature 1 which is made to accomplish the aims, a luminance is controlled within a luminance range that enables displaying images. Specifically, output of a backlight is biased within the range, so that luminance of the backlight is controlled.

However, such luminance control has difficulty in making a painting or the like look genuine.

More specifically, assume that a still image of a painting or the like is displayed on the screen of the television receiver at a low luminance of the backlight. In this case, if the luminance of the backlight is within the above-described luminance range, i.e. the luminance range determined on the assumption that images are displayed within such a range, the still image of a painting or the like is perceived as an image shown on the screen, not as a real painting painted on paper or the like.

This makes it impossible to make the painting or the like look genuine, and thus makes the viewer feel discomfort.

The viewer of moving images derived from broadcasting service or other sources on the television receiver normally sees colors of light beams emitted from the screen. On the contrary, the viewer of a real painting, photograph, or the like normally sees colors of light reflected from the real painting, photograph, or the like. In the above case, the viewer of the painting or the like on the screen of the television receiver feels discomfort and cannot feel the painting or the like genuine because the viewer sees colors of light beams emitted from the screen, not colors of reflected light.

As described above, the conventional art has difficulty in displaying a painting and the like in such a manner that they look genuine.

The present invention has been attained in view of the above problem, and an object of the present invention is to provide: an image display device capable of displaying an ornamental image of a painting or the like in such a manner that it looks genuine; a television receiver; a method for driving an image display device; and a method for driving a television receiver.

### Solution to Problem

In order to solve the above problem, an image display device of the present invention is an image display device having a screen for displaying an image thereon, wherein the screen provides a luminance of not more than 50 cd/m² for display of an ornamental image thereon.

According to the above arrangement, a luminance of the screen (screen luminance) for display of the ornamental image is an extremely low. This makes the viewer who views the television receiver feel like he/she is seeing colors of reflected light, not colors of light emitted from the screen. In other words, the viewer feels like he/she is viewing a real painting painted on paper or the like, not an image shown on screen.

Therefore, it is possible to provide an image display device capable of displaying the ornamental image in such a manner that it looks genuine.

The image display device can be used as an ornamental image display during the time that image data derived from broadcasting service, video recording, or the like is not supplied from an external entity.

Note that the ornamental image refers to an image used for decoration, such as a painting and a photograph. The painting herein refers to, for example, a picture painted or printed on paper, canvas, etc. The photograph herein includes, for example, a photograph printed or copied on paper.

Further, an image display device of the present invention may be such that the screen provides a luminance of not more than 30 cd/m² for display of the ornamental image thereon.

According to the above arrangement, the screen luminance is not more than 30 cd/m². With this arrangement, the viewer who views the ornamental image displayed on the screen is more likely to feel like he/she is viewing a real painted on paper or the like, even when ambient luminance is as low as not more than 100 cd/m², for example.

Still further, an image display device of the present invention is the image display device comprising: a backlight; and a liquid crystal display section, wherein the backlight is provided behind the liquid crystal display section, and the backlight provides a luminance of not more than 1500 cd/m² for display of the ornamental image on the liquid crystal display section.

According to the above arrangement, the screen luminance is controlled by luminance control of the backlight.

This facilitates displaying even a dark image on the whole while maintaining smoothly varying shades of color.

Further, the extremely low screen luminance enables realizes display with ultralow power consumption.

Yet further, an image display device of the present invention may be such that the backlight is configured to provide different luminances in its light-emitting surface.

Further, an image display device of the present invention may be such that the ornamental image is displayed on part of the screen, and the backlight provides a different luminance in the light-emitting surface for each of the following areas of the screen: (i) an area where the ornamental image is displayed and (ii) an area where the ornamental image is not displayed, so that a screen luminance of the area (i) is made different from that of the area (ii).

According to the above arrangement, the backlight is configured to be capable of emitting light beams of different luminances in its light-emitting surface. That is, the backlight is configured as a backlight capable of the so-called local dimming.

Therefore, for example, in order to display the ornamental image only on part of the screen, control can be performed so that a luminance of light emitted from the light-emitting surface of the backlight is adjusted to a desired value only for the part of the screen.

Further, since the above arrangement enables different luminances in the light-emitting surface, a luminance can be changed depending on an ornamental image to be displayed, for example. This facilitates improving sharpness of an image and improving contrast of an image particularly when a dark image is displayed.

Further, it is possible to easily realize reduction in power consumption by decreasing a luminance of the area for which a high luminance is not required in the light-emitting surface.

Still further, an image display device of the present invention may be such that the backlight is connected to a backlight unit control section for controlling luminances of the backlight, the backlight unit control section is connected to an ambient luminance sensor section, and the backlight unit control section controls the luminances of the backlight in accordance with an ambient luminance sensed by the ambient luminance sensor section, so that the screen luminances are controlled.

According to the above arrangement, the screen luminance is controlled in accordance with brightness of ambient light. This facilitates making the ornamental image look genuine, even when viewing conditions of the image display device change.

Yet further, an image display device of the present invention may be such that when the ambient luminance sensed by the ambient luminance sensor section is not more than 100 cd/m², the backlight unit control section controls the luminances of the backlight so that the screen luminance is not more than 30 cd/m².

According to the above arrangement, when the ambient luminance is as low as not more than 100 cd/m², the screen luminance is set to a much lower value, or not more than 30 cd/m².

This facilitates making the ornamental image displayed on the screen look genuine, even when the ambient luminance is low.

Further, an image display device of the present invention may be such that the backlight is provided with light sources, and LEDs are used as the light sources.

According to the above arrangement, LEDs (Light Emitting Diodes) are used as the light sources. This makes it possible to realize low luminance control, which is difficult for CCFL (Cold Cathode Fluorescent Lamp) to realize, and to realize a wide range of color reproduction, thus realizing a more real-looking display.

This facilitates making the backlight configured to be capable of the so-called local dimming.

Still further, a television receiver of the present invention includes the above image display device.

According to the above arrangement, it is possible to provide a television receiver that is less obstrusive from an aesthetic standpoint and capable of displaying the ornamental image such as a painting in such a manner that it looks genuine.

The television receiver herein refers to, for example, the above-described liquid crystal display device on which a tuner section or the like section required for reception of television broadcasting is mounted, or the above-described liquid crystal display device to which the tuner section or the like section is connected by wired or wireless means.

Yet further, in order to solve the above problem, a method for driving an image display device of the present invention is a method for driving an image display device having a screen for displaying an image thereon, wherein for display of an ornamental image on at least part of the screen, a luminance of the at least part of the screen is set to not more than 50 cd/m².

According to the above arrangement, the viewer who views the ornamental image feels like he/she is viewing a real. Therefore, it is possible to provide a method for driving an image display device that is less obstrusive from an aesthetic standpoint.

Further, a method for driving an image display device of the present invention may be such that when an ambient luminance is not more than 100 cd/m², the luminance of the at least part of the screen is to be displayed is set to not more than 30 cd/m².

The above-described method facilitates making the ornamental image displayed on the screen look genuine, even when the ambient luminance is low.

Still further, in order to solve the above problem, a method for driving a television receiver of the present invention is a method for driving a television receiver that includes an image display device having a screen for displaying an image thereon, wherein for display of an ornamental image on at least part of the screen, a luminance of the at least part of the screen is set to not more than 50 cd/m².

The above-described method facilitates making the ornamental image look genuine. Therefore, it is possible to provide a method for driving a television receiver that is less obstrusive from an aesthetic standpoint.

### Advantageous Effects of Invention

As described above, an image display device of the present invention is such that the screen provides a luminance of not more than 50 cd/m² for display of an ornamental image thereon.

Further, a method for driving an image display device of the present invention is such that for display of an ornamental image on at least part of the screen, a luminance of the at least part of the screen is set to not more than 50 cd/m².

Still further, a method for driving a television receiver of the present invention is such that for display of an ornamental image on at least part of the screen, a luminance of the at least part of the screen is set to not more than 50 cd/m².

This yields the effect of displaying the ornamental image, such as a painting, in such a manner that it looks genuine.

### Brief Description of Drawings

Fig. 1

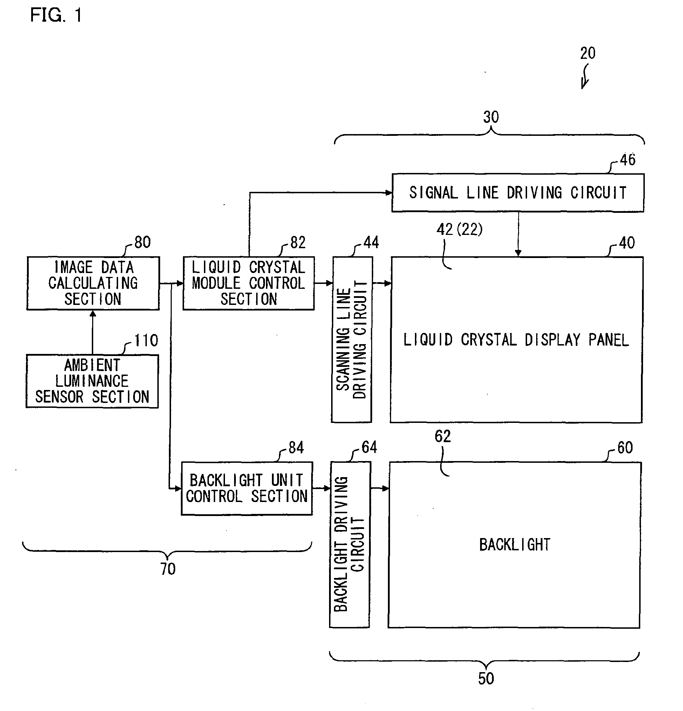

   Fig. 1 shows an embodiment of the present invention and is a block diagram schematically showing the configuration of a liquid crystal display device.
Fig. 2

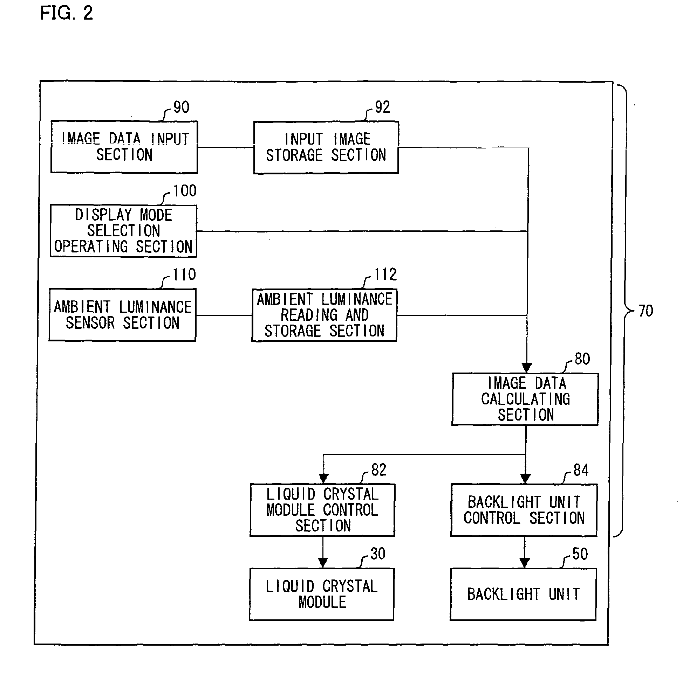

   Fig. 2 shows an embodiment of the present invention and is a block diagram regarding luminance control.
Fig. 3

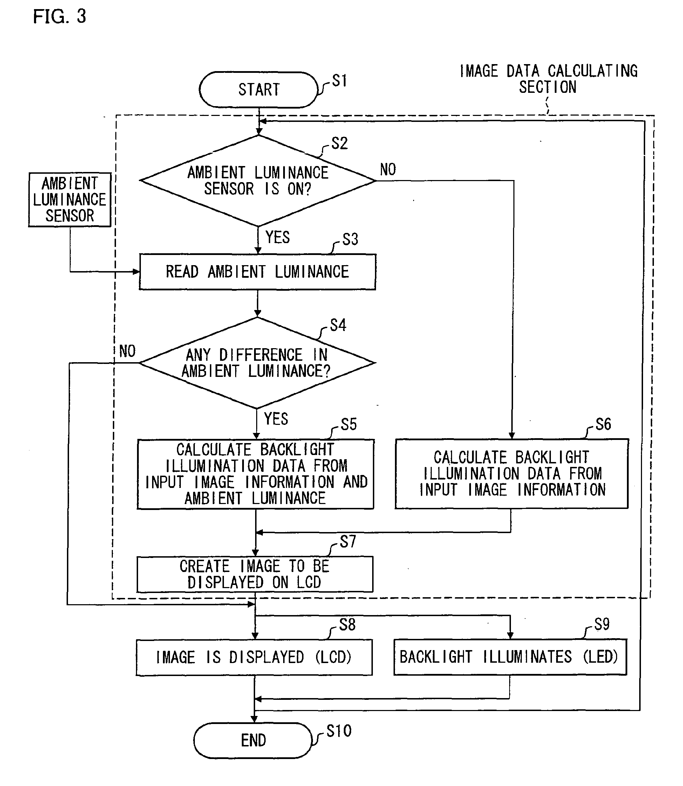

   Fig. 3 shows an embodiment of the present invention and is a view showing a flowchart of luminance control.
Fig. 4

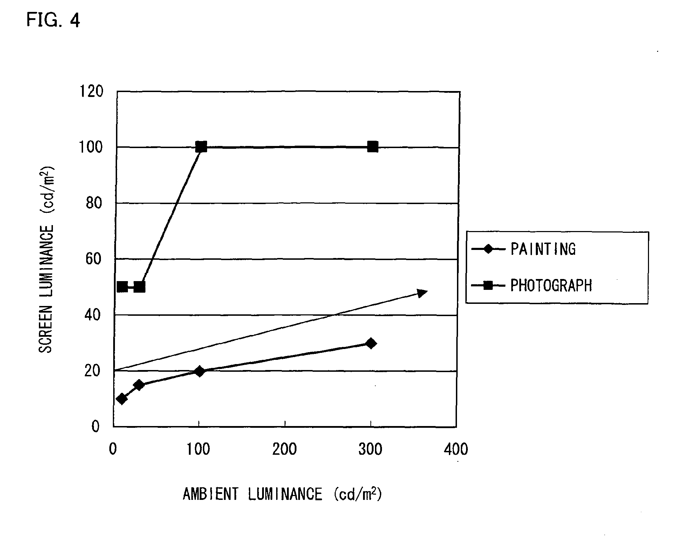

   Fig. 4 shows an embodiment of the present invention and is a view showing a relation between an ambient luminance and a screen luminance.
Fig. 5

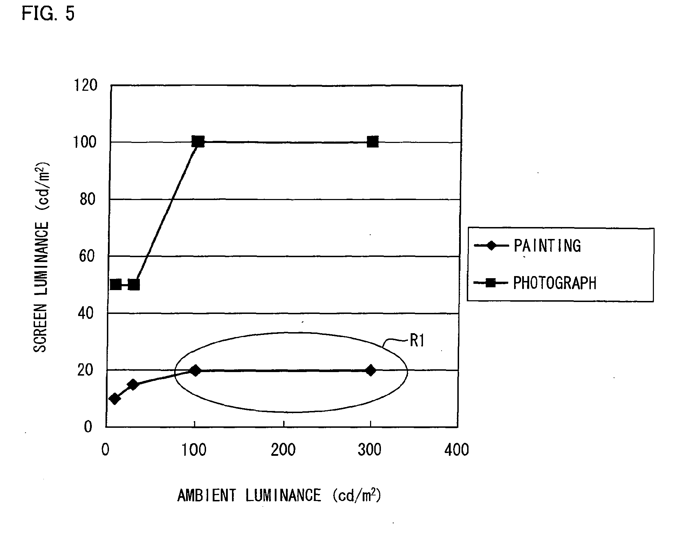

   Fig. 5 shows an embodiment of the present invention and is a view showing a relation between an ambient luminance and a screen luminance.
Fig. 6

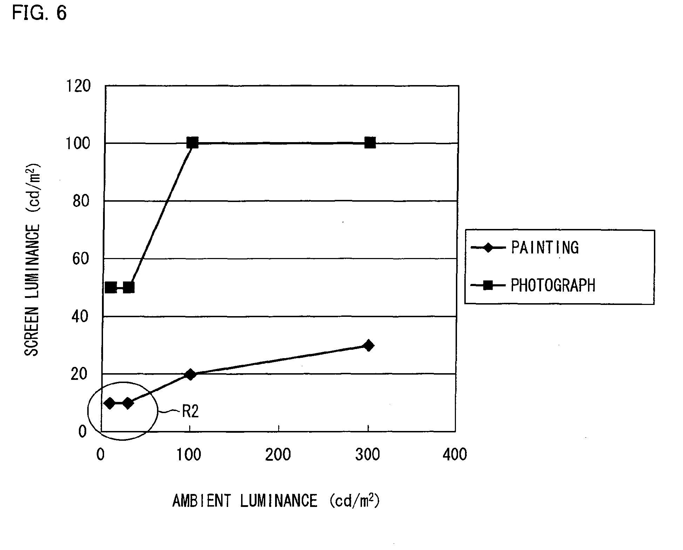

   Fig. 6 shows an embodiment of the present invention and is a view showing a relation between an ambient luminance and a screen luminance.
Fig. 7

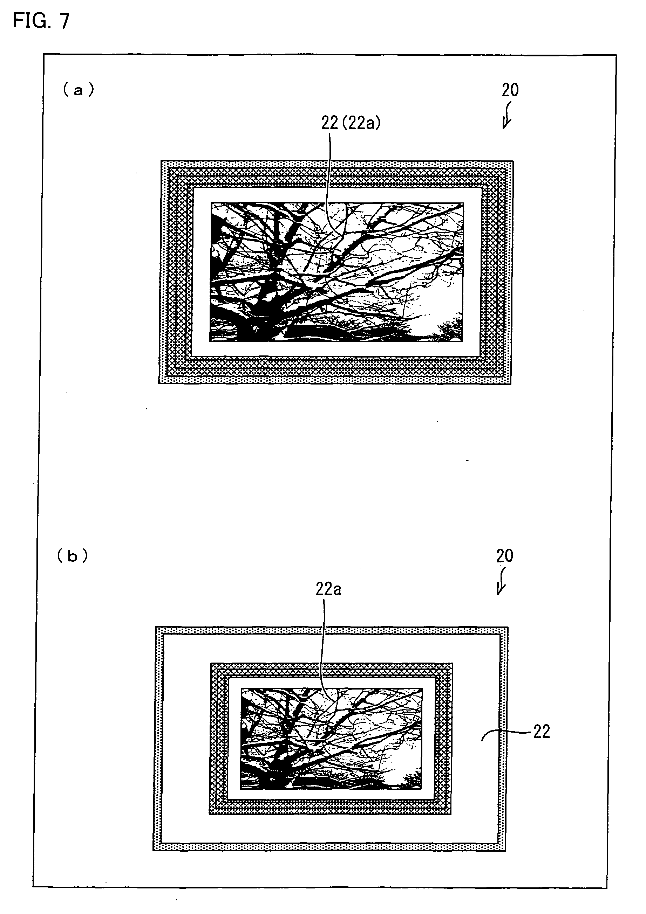

   Fig. 7 is a view showing states of a screen of the liquid crystal display device of an embodiment of the present invention, wherein (a) shows a state where a painting is displayed on the entire screen, and (b) shows a state where a painting is displayed on part of the screen.

### Description of Embodiments

The following will describe one embodiment of the present invention with reference to drawings.

### (Liquid crystal display device)

Fig. 1 shows an embodiment of the present invention and is a block diagram schematically showing the configuration of a liquid crystal display device (image display device) 20.

As shown in Fig. 1, the liquid crystal display device 20 of the present embodiment includes the following main components: a liquid crystal module 30; a backlight unit 50; and a sensor/control section 70. These main components will be described blow in this order.

### (Liquid crystal module)

First, the liquid crystal module 30 will be described. The liquid crystal module 30 includes: a liquid crystal display panel 40 having a display surface 42; and a scanning line driving circuit 44 and a signal line driving circuit 46 both of which supply signals for displaying images on the liquid crystal display panel 40. The display surface 42 of the liquid crystal display panel 40 constitutes a screen 22 of the liquid crystal display device 20.

Further, on the liquid crystal display panel 40, a plurality of scanning lines (not shown) drawn from the scanning line driving circuit 44 and a plurality of signal lines (not shown) drawn from the signal line driving circuit 46 are provided so as to form a matrix.

More specifically, the liquid crystal display panel 40 of the present embodiment is the so-called active matrix type liquid crystal display panel and includes a plurality of pixels. In addition, at each of the pixels, a TFT (Thin Film Transistor) element (not shown) is provided as a switching element.

Further, the liquid crystal display panel 40 is provided with the so-called color filter, thus enabling color display.

Note that the type of the liquid crystal display panel 40 is not limited to the active matrix type. Alternatively, various types of liquid crystal display panels may be adopted as the liquid crystal display panel 40.

### (Backlight unit)

Next, the backlight unit 50 will be described. The backlight unit 50 is provided behind the liquid crystal module 30. The backlight unit 50 includes: a backlight 60 having a light-emitting surface 62; and a backlight driving circuit 64 for driving the backlight 60.

Further, the backlight unit 50 of the present embodiment is configured to be capable of the so-called local dimming. The local dimming herein means the ability of varying luminances from one predetermined area to another in the light-emitting surface.

Examples of such a configuration realizing the local dimming include a configuration in which a light guide, which is one of the components of the backlight 60, is divided into smaller ones and light sources are disposed for the separate light guides, respectively. With separate control of the light sources, it is possible to provide different luminances in the light-emitting surface.

Note that the configuration of the backlight unit 50 is not limited to the above-described configuration. More specifically, the configuration of the backlight unit 50 is not necessarily the configuration realizing the local dimming. Alternatively, the backlight unit 50 may be configured so as to emit light with uniform luminance in the light-emitting surface.

In a case where the configuration realizing the local dimming is adopted, the local dimming can be realized by a method other than a method adopting the configuration using the separate light guides.

Further, as the light sources, red, green, and blue LEDs (Light Emitting Diodes) can be used. The use of the LEDs as the light sources facilitates reducing power consumption and illumination at a low luminance. Furthermore, the use of the LEDs as the light sources realizes expressions with shades of color smoothly varying from a low grayscale level, as well as a wide range of color reproduction. This enables display in colors closer to colors of a real with less discomfort. Moreover, illumination of the LEDs is varied in one plane depending upon images to be displayed, thus realizing further reduction of power consumption as well as a high contrast.

Note that the light sources are not limited to the LEDs. Alternatively, for example, fluorescent tubes such as a cold cathode fluorescent tube (CCFL: Cold Cathode Fluorescent Lamp) or other light sources can be used.

### (Sensor/control section)

Next, the sensor/control section 70 will be described. The sensor/control section 70 is a section that senses ambient luminance and controls the liquid crystal module 30 and the backlight unit 50 in accordance with the sensed ambient luminance.

More specifically, the sensor/control section 70 mainly includes an ambient luminance sensor section 110 and an image data calculating section 80 connected to the ambient luminance sensor section 110.

The image data calculating section 80 is connected to: a liquid crystal module control section 82 that controls the liquid crystal module 30; and a backlight unit control section 84 that controls the backlight unit 50.

The liquid crystal module control section 82 is connected to the scanning line driving circuit 44 and the signal line driving circuit 46 of the aforementioned liquid crystal module 30.

The backlight unit control section 84 is connected to the backlight driving circuit 64 of the aforementioned backlight unit 50.

The following will describe further details of the configuration of the sensor/control section 70 and how the sensor/control section 70 specifically performs controls, with reference to Figs. 2 and 3.

### (Block diagram showing luminance control)

Fig. 2 is a block diagram regarding luminance control in a liquid crystal display device of the present embodiment.

Fig. 2 shows further details of the configuration of the sensor/control section 70 that has been previously described with reference to Fig. 1.

That is, the image data calculating section 80 is not only connected to the ambient luminance sensor section 110, but also is configured to be capable of receiving data on images and information on selection of display modes.

### (Image data)

Specifically, an image data input section 90 is connected to the image data calculating section 80 via an input image storage section 92.

The image data input section 90 is a section that accepts input of an ornamental image of a painting, a photograph, or the like, for example.

The input image storage section 92 is a section that stores image data of the ornamental image supplied to the image data input section 90.

Note that images derived from television broadcasting are not normally stored in the input image storage section 92.

### (Display mode)

Further, the image data calculating section 80 is connected to a display mode selection operating section 100.

The display mode selection operating section 100 is an operation section for selecting a display mode of the liquid crystal display device 20 between a normal television mode and a picture mode in which the ornamental image is displayed.

Note that the television mode means a display mode in which a moving image derived from television broadcasting, video recording, or the like is displayed on the liquid crystal display device 20. That is, the television mode means a display mode in which the liquid crystal display device 20 is used as a normal television.

In contrast, the picture mode means a display mode in which the ornamental image of a painting, a photograph, or the like is displayed on a screen for aesthetic purposes.

### (Luminance sensor)

The image data calculating section 80 is connected to the ambient luminance sensor section 110 that has been previously described with reference to Fig. 1, via an ambient luminance reading and storage section 112.

The ambient luminance sensor section 110 is provided with a sensor for measuring a luminance in the vicinity of a position where the liquid crystal display device 20 is placed.

An ambient luminance sensed by the sensor is read and stored by the ambient luminance reading and storage section 112.

In this manner, the sensor measures the ambient luminance, and the measurement result is then stored. With this configuration, it is possible to obtain one of factors in controlling a screen luminance of the liquid crystal display device 20, i.e. information on brightness in viewing conditions of the liquid crystal display device 20.

### (Image data calculating section)

The image data calculating section 80 calculates image data, luminance information, and others to be outputted to the liquid crystal module control section 82 and the backlight unit control section 84, in accordance with the above-described image data, display mode, and information on ambient luminance.

Note that the liquid crystal module control section 82 and the backlight unit control section 84 are respectively connected to the liquid crystal module 30 and the backlight unit 50, as previously described with reference to Fig. 1.

### (Flow chart)

The following will describe a flow of luminance control of the screen of the liquid crystal display device 20 of the present embodiment step by step with reference to Fig. 3.

### <S1>

First, the flow starts with selection of the picture mode as the display mode by a user of the liquid crystal display device 20, such as a viewer of the liquid crystal display device 20.

### <S2>

The image data calculating section 80 determines whether or not sensing of ambient luminance, i.e. sensing of brightness in the viewing conditions is ON (ambient luminance sensor is ON).

If the ambient luminance sensor is ON, the process proceeds to S3, where the sensed ambient luminance is read.

Meanwhile, if the ambient luminance sensor is not ON, the process proceeds to S6. That is, as described previously, in S6, illumination data of the backlight as a light source is calculated from input image information, which is information other than the ambient luminance.

### <S3>

If the ambient luminance sensor has been determined to be ON in S2, the image data calculating section 80 reads the ambient luminance having been sensed by the sensor.

Specifically, the ambient luminance having been sensed by the sensor of the ambient luminance sensor section 110 is supplied to the image data calculating section 80 via the ambient luminance reading and storage section 112.

### <S4>

Then, in S4, the image data calculating section 80 determines whether or not there is any difference in the supplied ambient luminance.

If it has been determined in S4 that there is difference in ambient luminance, the process proceeds to S5.

Meanwhile, if it has been determined that there is no difference in ambient luminance, the process proceeds to S8 and S9, both of which will be described later. This is because the backlight illumination data does not have to be recalculated.

The above descriptions have been given concerning second and subsequent readings in a loop procedure. The process proceeds to S5 on the assumption that there is difference in ambient luminance from the first reading.

### <S5>

In a case where it has been determined in S4 that there is any difference in ambient luminance, and in the first round of the loop procedure, the backlight illumination data is calculated on the basis of the input image information and the thus read ambient luminance. Specifically, the backlight illumination data with which a predetermined luminance is given off from the screen is calculated.

### <S6>

Next, S6 will be described. As described previously, S6 is performed if the ambient luminance sensor has been determined not to be ON in S2.

The step S6 is identical with the step S5 in that the backlight illumination data is calculated. However, the step S6 is different from the step S5 in that the calculation is performed on the basis of data except the ambient luminance.

This is because S6 is performed when sensing of the ambient luminance has not been performed due to an OFF state of the ambient luminance sensor.

Then, predetermined backlight illumination data (luminance) varying according to an ornamental image is derived. The luminance for the ornamental image is set to be lower than a luminance set in the television mode.

### <S7>

Next, S7 will be described. In S7, an image to be outputted to the liquid crystal module (panel-side image) is created in connection with the backlight illumination data having been calculated in the step S5 or S6.

### <S8 and S9>

On the basis of the data having been calculated and created in S7 and the preceding steps, an image is displayed on the liquid crystal module, and illumination of the backlight is performed in the backlight unit.

With the above process, it is possible to display an image at a desired screen luminance.

### <S10>

Finally, the process ends with S10.

For example, in the flow of the present embodiment, a loop procedure (iteration procedure) may be realized such that after a lapse of a predetermined time from display of an image, a value measured by the ambient luminance sensor is read again, and the backlight illumination data and other data are then recalculated. Specifically, for example, a flow in which the process returns to the step S2 after the steps S8 and 9 may be employed.

With the structure realizing such a loop procedure, it is possible to appropriately detect how the viewing conditions change and thus to realize a high-quality display more suitable for the viewing conditions, such as ambient luminance.

Further, in the above loop procedure, calculation of the backlight illumination data and other data may be omitted if there is no difference in ambient luminance.

A specific example is as follows. As described previously, if no difference in ambient luminance has been determined in the step S4, the backlight illumination data and other data do not have to be recalculated, and that is why a repeat of the same step may be omitted. In this case, display of an image on the liquid crystal module and illumination of the backlight in the backlight unit are realized on the basis of previous backlight illumination data and data of the image to be displayed on the LCD.

Note that the steps S2 through S7 are performed by the image data calculating section 80 of the sensor/control section 70, as described previously.

In the television mode, calculation of image data should be made in the conventional manner.

Alternatively, even the television mode may be arranged so that luminance for display can be changed according to an ambient luminance, by using the ambient luminance sensor. In such a case, it is possible to use a single ambient luminance sensor both in the television mode and in the picture mode.

In other words, the ambient luminance sensor used in the picture mode can double as the ambient luminance sensor used in the television mode, without additional components.

### (Screen luminance)

In the liquid crystal display device 20 of the present embodiment, when the display mode is the picture mode for displaying an ornamental image, a screen luminance of the screen 22 is not more than 50 cd/m², particularly not more than 30 cd/m².

It can be said that this screen luminance is extremely low, as compared with a screen luminance of not less than 450 cd/m² for a normal television receiver and a screen luminance of not less than 200 cd/m² that is a lowered value for use in a theater, etc.

Note that backlight luminance to realize the above screen luminance is set to 1500 cd/m², more preferably 1000 cd/m².

Further, with the control shown in the flowchart, i.e. the screen luminance control carried out with sensing of the ambient luminance, it is possible to control a screen luminance more finely according to a viewing condition, particularly the ambient luminance.

Specifically, the viewing conditions in Japan and other Asian countries can be different from those in Europe and the U.S. Moreover, due to such a difference in viewing conditions, a suitable screen luminance can be different.

That is, the viewing conditions in Japan and other Asian countries are such that ambient light levels are generally high. That is why high viewability can be attained at a comparatively high screen luminance.

Specifically, the viewing conditions in Japan and other Asian countries are attributed to the use of direct illumination. In many cases, a fluorescent lamp is used for the direct illumination. Moreover, in many cases, an ambient luminance is about 200 lux to 300 lux, and an ambient luminance in the front of the screen is about 100 lux.

Under such viewing conditions, a screen luminance for display of a painting or the like is preferably in the range from 20 cd/m² to 30 cd/m². Such a screen luminance avoids that one has the sense of viewing a light-emitter, and thus makes the liquid crystal display device not in active use unnoticeable.

Further, a screen luminance for display of a photograph or the like can be set to 100 cd/m². Such a screen luminance makes the liquid crystal display device to easily maintain sharpness to some extent and have good contrast. Therefore, the liquid crystal display device can be suitably used as a photograph display device (photoviewer).

In contrast, in the case of the viewing conditions in Europe and the U.S., the preferable screen luminance is different.

That is, the viewing conditions in Europe and the U.S. are such that ambient light levels are generally low. That is why high viewability can be attained at a comparatively low screen luminance.

Specifically, the viewing conditions in Europe and the U.S. are attributed to the use of indirect illumination. In many cases, an incandescent lamp is used for the indirect illumination. Moreover, in many cases, ambient luminance (room luminance) is about 10 lux to 30 lux, and ambient luminance in the front of the screen is about 10 lux to 30 lux.

Under such viewing conditions, a screen luminance for display of a painting or the like is preferably in the range from 10 cd/m² to 15 cd/m².

On the other hand, a screen luminance for display of a photograph or the like is preferably 50 cd/m².

Further, even when the liquid crystal display device is located at the same place, an ambient luminance can change depending upon the following factors, illumination and blinking of lighting appliance, the time of day, etc. Accordingly, a suitable screen luminance can change.

In such a case, the arrangement in which the screen luminance is automatically set to a suitable value according to an ambient luminance facilitates the viewer to view a screen that provides a suitable luminance all the time.

Automatic control of the screen luminance can be realized, for example, on the basis of the flowchart previously described with reference to Fig. 3.

### (Examples of luminance control)

The following will describe examples of luminance control in the liquid crystal display device 20 of the present embodiment with reference to Figs. 4 through 6. In other words, the following will describe examples of how to calculate the backlight illumination data in the flowchart shown in Fig. 3.

Figs. 4 through 6 show the present embodiments of the present invention, and show relations between an ambient luminance and a screen luminance. In Figs. 4 through 6, a lateral axis indicates an ambient luminance, and a longitudinal axis indicates a screen luminance. Further, in Figs. 4 through 6, a line with black-colored rhombuses indicates a painting, and a line with black-colored squares indicates a photograph.

### (Control example 1)

First, the following will describe an example that the screen luminance changes with an ambient luminance level, in particular, among the viewing conditions, with reference to Fig. 4.

As indicated by the line with black-colored rhombuses in Fig. 4, the screen luminance for display of a painting moderately increases with increase in ambient luminance.

A way of increasing the screen luminance with increase in ambient luminance is not particularly limited. For example, the screen luminance can be increased with increase in ambient luminance in various methods including the use of an approximate straight line as indicated by a single directional line shown in Fig. 4, the use of an approximate curve, the use of a stepwise increase pattern, and reading from a lookup table.

Similarly, as indicated by the line with black-colored squares, the screen luminance for display of a photograph increases with increase in ambient luminance.

Note that the screen luminance is not necessarily changed with change in ambient luminance, and can be fixed to a value of not more than 50 cd/m² or a value of not more than 30 cd/m², for example.

### (Control example 2)

The following will describe an example that the screen luminance is kept at a constant level when the ambient luminance reaches a predetermined level or a higher level, with reference to Fig. 5.

That is, as indicated by a region R1 for the line with black-colored rhombuses, the screen luminance is kept at 20 cd/m², when the ambient luminance becomes not less than 100 cd/m².

With such control, it is possible to prevent brighter display than necessary and to realize a more real-looking display.

### (Control example 3)

The following will describe an example that the screen luminance is kept at a constant level when the ambient luminance reaches a predetermined level or a lower level, with reference to Fig. 6.

That is, as indicated by a region R2 for the line with black-colored rhombuses, the screen luminance is kept at 12 cd/m², when the ambient luminance becomes not more than 30 cd/m².

With such control, it is possible to secure a certain level of viewability even in low ambient light.

### (Example of the screen)

The following will describe display on the liquid crystal display device 20, with reference to (a) and (b) of Fig. 7. (a) and (b) of Fig. 7 are views showing states of the screen 22 in the liquid crystal display device 20 of the present embodiment, wherein (a) shows a state where a painting is displayed on the entire screen 22, and (b) shows a state where a painting is displayed on part of the screen 22.

In the liquid crystal display device 20 of the present embodiment, when the picture mode is selected as the display mode, an ornamental image of a painting or the like is displayed on the screen 22.

In this case, the ornamental image may be displayed on the entire screen 22, as shown in (a) of Fig. 7. Alternatively, the ornamental image may be displayed only on part of the screen 22, as shown in (b) of Fig. 7.

In the case where the ornamental image is displayed on the entire screen 22, the entire screen 22 becomes an ornamental image display area 22a, as shown in (a) of Fig. 7. Besides, a screen luminance of the ornamental image display area 22a is set to a value of not more than 50 cd/m² or a value of not more than 30 cd/m², in relation to the ambient luminance.

Further, in the case where the ornamental image is displayed, not on the entire screen 22, but on part of the screen 22, the part of the entire screen 22 becomes the ornamental image display area 22a, as shown in (b) of Fig. 7. As in the above case, the screen luminance of the ornamental image display area 22a is set to a value of not more than 50 cd/m² or a value of not more than 30 cd/m².

For the display of the ornamental image on part of the screen 22 as shown in (b) of Fig. 7, effective luminance control and low power consumption are realized if the backlight unit 50 is configured to be capable of the previously-described local dimming.

This is because the local dimming allows for emission of light of a desired brightness only from an area corresponding to the ornamental image display area 22a out of the light-emitting surface 62 in the backlight 60.

### (Television receiver)

The liquid crystal display device 20 can be used alone as a monitor or the like. Alternatively, the liquid crystal display device 20 can be configured as a television receiver, in combination with components, e.g. a tuner, required for reception of television broadcasting.

The present invention is not limited to the aforementioned embodiments and is susceptible of various changes within the scope of the accompanying claims. Also, an embodiment obtained by suitable combinations of technical means disclosed in the different embodiments are also included within the technical scope of the present invention.

### Industrial Applicability

An image display device of the present invention is capable of displaying an ornamental image of a painting or the like in such a manner that it looks genuine. Therefore, the image display device of the present invention is suitably applicable to, for example, a large-screen liquid crystal display device and a television receiver of which their visual beauty to match interior decorations are demanded.

### Reference Signs List

- 20: Liquid crystal display device
- 22: Screen
- 22a: Ornamental image display area
- 30: Liquid crystal module
- 40: Liquid crystal display panel
- 42: Display surface
- 44: Scanning line driving circuit
- 46: Signal line driving circuit
- 50: Backlight unit
- 60: Backlight
- 62: Light-emitting surface
- 64: Backlight driving circuit
- 70: Sensor/control section
- 80: Image data calculating section
- 82: Liquid crystal module control section
- 84: Backlight unit control section
- 90: Image data input section
- 92: Input image storage section
- 100: Display mode selection operating section
- 110: Ambient luminance sensor section
- 112: Ambient luminance reading and storage section

## Claims

1. An image display device having a screen for displaying an image thereon, wherein
the screen provides a luminance of not more than 50 cd/m² for display of an ornamental image thereon.

2. The image display device according to claim 1, wherein
the screen provides a luminance of not more than 30 cd/m² for display of the ornamental image thereon.

3. The image display device according to claim 1 or 2, comprising:
a backlight; and
a liquid crystal display section, wherein
the backlight is provided behind the liquid crystal display section, and
the backlight provides a luminance of not more than 1500 cd/m² for display of the ornamental image on the liquid crystal display section.

4. The image display device according to claim 3, wherein
the backlight is configured to provide different luminances in its light-emitting surface.

5. The image display device according to claim 4, wherein
the ornamental image is displayed on part of the screen, and
the backlight provides a different luminance in the light-emitting surface for each of the following areas of the screen: (i) an area where the ornamental image is displayed and (ii) an area where the ornamental image is not displayed, so that a screen luminance of the area (i) is made different from that of the area (ii).

6. The image display device according to any one of claims 3 through 5, wherein
the backlight is connected to a backlight unit control section for controlling luminances of the backlight,
the backlight unit control section is connected to an ambient luminance sensor section, and
the backlight unit control section controls the luminances of the backlight in accordance with an ambient luminance sensed by the ambient luminance sensor section, so that the screen luminances are controlled.

7. The image display device according to claim 6, wherein
when the ambient luminance sensed by the ambient luminance sensor section is not more than 100 cd/m², the backlight unit control section controls the luminances of the backlight so that the screen luminance is not more than 30 cd/m².

8. The image display device according to any one of claims 3 through 7, wherein
the backlight is provided with light sources, and
LEDs are used as the light sources.

9. A television receiver including an image display device according to any one of claims 1 through 8.

10. A method for driving an image display device having a screen for displaying an image thereon, wherein
for display of an ornamental image on at least part of the screen, a luminance of the at least part of the screen is set to not more than 50 cd/m².

11. The method according to claim 10, wherein
when an ambient luminance is not more than 100 cd/m², the luminance of the at least part of the screen is set to not more than 30 cd/m².

12. A method for driving a television receiver that includes an image display device having a screen for displaying an image thereon, wherein
for display of an ornamental image on at least part of the screen, a luminance of the at least part of the screen is set to not more than 50 cd/m².
